(19) Europäisches Patentamt / European Patent Office / Office européen des brevets

(11) **EP 3 393 083 B1**

(12) **EUROPEAN PATENT SPECIFICATION**

(45) Date of publication and mention
of the grant of the patent:
**29.09.2021 Bulletin 2021/39**

(21) Application number: **17167340.3**

(22) Date of filing: **20.04.2017**

(51) Int Cl.:
**H04L 12/24** *(2006.01)*

(54) **METHOD AND DEVICE FOR CONFIGURING A DATA TRANSMISSION AND PROCESSING SYSTEM**

VERFAHREN UND VORRICHTUNG ZUR KONFIGURATION EINES DATENÜBERTRAGUNGS- UND -VERARBEITUNGSSYSTEMS

PROCÉDÉ ET DISPOSITIF POUR CONFIGURER UN SYSTÈME DE TRANSMISSION ET DE TRAITEMENT DE DONNÉES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**24.10.2018 Bulletin 2018/43**

(73) Proprietor: **Nokia Technologies Oy
02610 Espoo (FI)**

(72) Inventor: **HOYDIS, Jakob
91620 Nozay (FR)**

(74) Representative: **Nokia EPO representatives
Nokia Technologies Oy
Karakaari 7
02610 Espoo (FI)**

(56) References cited:
**US-A1- 2001 025 232      US-A1- 2014 025 382
US-B1- 6 269 351**

• **TIMOTHY J O'SHEA ET AL: "An Introduction to Machine Learning Communications Systems", ARXIV.ORG, CORNELL UNIVERSITY LIBRARY, 201 OLIN LIBRARY CORNELL UNIVERSITY ITHACA, NY 14853, 2 February 2017 (2017-02-02), XP080746465,**

## Description

FIELD OF THE INVENTION

The present invention relates to the field of telecommunication. In particular, the present invention relates to a method and a device for configuring a data transmission and processing system.

BACKGROUND

In many systems, data is processed by an application to produce a useful output. The sort of data that is of concern here include digital images, video and audio files, as well data coming from sensors, radars, telescopes, and radio receivers. The application may perform some form of statistical inference on the data (such as object recognition, image classification, spectrum sensing, speech transcription, prediction/detection of events).

In some cases, the data is not directly available on the hardware that runs the application. Thus, it must be transferred to it through a communications channel (e.g., radio link, coaxial cable, optical fiber, etc.) with the help of a transmitter and a receiver. Depending on the application, it might not be necessary to transfer the full raw data over the channel and a compressed version of it is transferred instead to lower the burden on the communications system.

In known transmission systems, the transmitter is composed of multiple processing blocks that carry out well-defined and isolated functions, such as source and channel coding, modulation, pulse shaping, digital-to-analog conversion (DAC) conversion, mixing on a radio/optical carrier, and amplification. Likewise, the receiver consists of similar blocks in reverse order, namely amplification, down conversion, analog-to-digital conversion (ADC), matched filtering, decimation, equalization, demodulation, channel and source decoding. In such transmission systems, each functional block is designed and optimized individually, which may not result in the best end-to-end performance.

From a high-level perspective, each of the transmitter, channel and receiver of a transmission system transforms an input vector into an output vector, and can hence be modeled as a neural network. Since a chain of neural networks is again an even larger neural network, it has been proposed to model an entire transmission system as a neural network autoencoder. Such a system can be trained from end-to-end in a supervised manner, to achieve a better end-to-end performance. However, this concept does not scale to practical block length, e.g., 100 bits, since the neural network would need to be trained to classify $2^{100}$ different classes.

US 6 269 351 B1 describes the uses of artificial neural networks for various applications. US 2014/025382 A1 describes a speech processing system comprising a parametric model. US2001025232 describes a hybrid linear-neural network process control which combines a primary analyzer and a neural network.

O'SHEA AT AL "An Introduction to Machine Learning Communication System", ARXIV.ORG, CORNELL UNIVERSITY ITHACA, NY 14854, 2 February 2017 (2017-02-02), describes the end-to-end training of a model of a communication system.

SUMMARY

It is thus an object of embodiments of the present invention to propose methods and devices for configuring a data transmission and processing system, which do not show the inherent shortcomings of the prior art.

Accordingly, embodiments relate to a method for configuring a data transmission and processing system according to claim 1.

Correlatively, embodiments relate to a configuration device according to claim 11.

An output vector may have a lower dimension than an input vector.

In some embodiments, the data transmission and processing system comprises a plurality of transmitters, wherein an input vector specifies the input data of the plurality of transmitters. In some embodiments, the data transmission and processing system comprises a plurality of receivers, wherein an output vector specifies the output data from the plurality of receivers.

Training said machine learning model may comprise determining weights of the transmitter neural network and of the receiver and application neural network by applying a stochastic gradient descent algorithm.

The transmitter neural network may include multiple dense layers followed by a normalization layer configured for applying one of: a normalization to a predetermined norm, scaling to a unit absolute value, convolution with a filter.

In some embodiments, the transmitter model includes said transmitter neural network and at least one other transmitter processing module, and/or the receiver and application model includes said receiver and application neural network at least one other receiver and application processing module.

In some embodiments, the data transmission and processing system is a distributed detection system for determining a state in function of a plurality of detectors.

In some embodiments, the data transmission and processing system is a recognition or classification system for recognizing or classifying an object in function of a plurality of partial observations.

Embodiments also relate to a computer program comprising instructions for performing the method mentioned before when said instructions are executed by a computer. The computer program may be stored on a non-transitory computer readable medium.

Embodiments also relate to a source device according to claim 12, to a destination device according to claim 13, and to a data transmission and processing system according to claim 14.

The scope of protection sought for various embodiments of the invention is set out by the independent claims.

BRIEF DESCRIPTION OF THE DRAWINGS

The above and other objects and features of the invention will become more apparent and the invention itself will be best understood by referring to the following description of embodiments taken in conjunction with the accompanying drawings wherein:

Figure 1 is a block diagram of a system for transmission and processing of data,
Figure 2 is a block diagram of a machine learning model of the system of Figure 1,
Figure 3 is a flowchart of a method for configuring the system of Figure 1,
Figures 4 to 6 are block diagram representing respective example of the machine learning model of Figure 2, and
Figure 7 is structural view of the configuration device of the system of Figure 1.

DESCRIPTION OF EMBODIMENTS

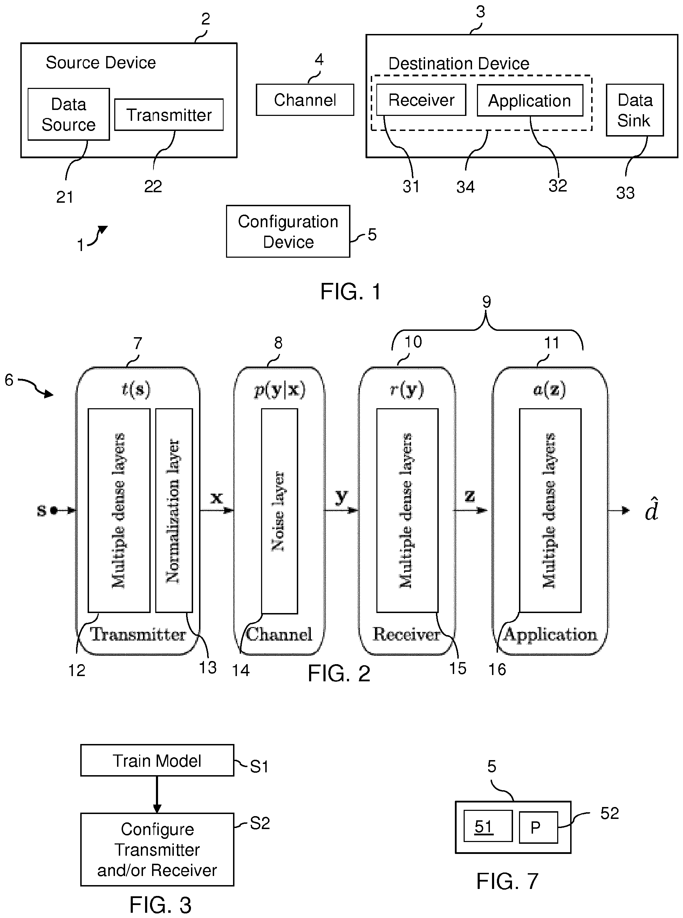

**Figure 1** is a block diagram of a system 1 for transmission and processing of data. The system 1 comprises one or more source devices 2, one or more destination devices 3, a communication channel 4 connecting the source devices 2 to the destination devices 3, and a configuration device 5. For simplicity, Figure 1 shows only one source device 2 and one destination device 3. The system 1 allows producing an output at the destination device 3 in function of data provided at the source device 2.

A source device 2 comprises a data source 21 and a transmitter 22. The data source 21 is configured for providing data that is used by the system 1. The data source 21 may include for example at least one of: a sensor, a user interface, a local memory, a network interface... The data provided by the data source 21 may include at least one of: digital images, video and audio files, data coming from sensors, radars, telescopes, radio receivers... The transmitter 22 is configured for processing the data provided by the data source 21 and for outputting the processed data to the communication channel 4 for transmission to the destination device 3. The transmitter 22 comprises a configurable part which may be configured by the configuration device 5 according to the method described hereafter with reference to Figures 2 to 6.

A source device 2 may present the hardware architecture of a computer and may be for example one of: a user device (laptop, smart phone, wearable activity tracker...), a network equipment (cellular radio station, router, could server...), a monitoring device (camera, Internet of Things sensor...).

A destination device 3 comprises a receiver 31, an application module 32 and a data sink 33. The receiver 31 and the application module 32 process the data received from the source device 2 through the communication channel 4 to produce an output for the data sink 33. Here, it should be noted that although Figure 1 shows the receiver 31 and the application module 32 as two distinct parts, there may not be a formal limit between the receiver 31 and the application module 32. In other words, the destination device 3 comprises more generally a receiver and application module 34. The receiver and application module 34 comprises a configurable part which may be configured by the configuration device 5 according to the method described hereafter with reference to Figures 2 to 6. The data sink 3 receives the output of the receiver and application module 34 and may include for example one of: a user interface (display, audio speaker...), a local memory, a network interface...

A destination device 3 may present the hardware architecture of a computer and may be for example one of: a user device (laptop, smart phone...), a network equipment (cellular radio station, router, could server...), a monitoring device (camera, Internet of Things sensor...).

The communication channel 4 provides a physical link between the transmitter 22 of one or more source devices 2 and the receiver 31 of one or more destination devices 3. The communication channel 4 is for example a radio link, a coaxial cable, a twisted pair cable, and optical fiber... In some embodiments, the communication channel 4 comprises multiple orthogonal channels (in time/frequency/space) that are used in parallel.

The configuration device 5 is configured for training a machine learning model of the system 1 and for configuring the system 1 in function of the trained machine learning model. More specifically, the configuration device 5 may configure the transmitter 22 of one or more source devices 2 and/or the receiver and application module 34 of one or more destination devices 3. Training the model and configuring the system 1 may occur for example during an initial setup of the system 1 and/or after the system 1 has already been setup and functioning.

**Figure 2** is a block diagram of a machine learning model 6 of the system 1, used by the configuration device 5.

From a high-level perspective, each of the transmitter 22, communication channel 4, receiver 31 and application module 32 of Figure 1 transforms an input vector into an output vector, and can hence be modeled, at least partially, as a neural network. Since a chain of neural networks is again an even larger neural network, the configuration device 5 can model the entire system 1 by a neural network-based machine learning model 6. The machine learning model 6 can be trained from end-to-end in a supervised manner, for example via stochastic gradient descent (SGD) for any differentiable loss function. By doing so, the configuration device 5 jointly optimize all of the individual components with respect to an end-to-end metric. This is fundamentally different from traditional system design where each component is individually optimized for its own sub-task.

More specifically, the machine learning model 6 comprises a transmitter model 7, a channel model 8 and a receiver and application model 9.

The input of the machine learning model 6 is an input vector s which specifies the input data provided by the data source 21. In case the system 1 comprises multiple data sources 21, the vector s specifies the input data provided by the multiple data sources 21.

The transmitter model 7 transforms an input vector s into a vector x:

$$x = t(s)$$

The transmitter model 7 comprises a neural network which includes multiple dense layers 12 followed by a normalization layer 13. The normalization layer 13 is used to normalize the vector x in a way so that it is suitable for transmission by the transmitter hardware, e.g., comply with a maximum amplitude, power limit, etc. Accordingly, the normalization layer 13 applies a known transformation to its inputs, such as normalization to a predetermined norm, scaling of the elements to have unit absolute value, or convolution with a known filter. This layer has no trainable parameters but is used to satisfy the hardware constraints of the hardware transmitter 22.

The channel model 8 represents the relation between the transmitted vector x and the received vector y, for example based on a probability density function p(y|x). In some embodiments, the channel model 8 includes a sequence of stochastic regularization layers 14, e.g., addition of Gaussian noise, convolution with a random channel impulse response. These layers 14 have no trainable weights. The channel model 8 may include also at least one of: a random phase offset, frequency offset, sampling-frequency offset, quantization, and clipping. The channel model 8 provides a vector y in function of the vector x.

In embodiments wherein the communication channel 4 comprises multiple orthogonal channels (in time/frequency/space) that are used in parallel, training the model on multiple channels simultaneously provides learning some form of resource allocation over the channels.

The receiver and application model 9 transforms a received vector y into an output vector $\hat{d}$: $\hat{d}$ = g(y). The receiver and application model 9 comprises a neural network.

In some embodiments, the receiver and application model 9 comprises a receiver model 10 and an application model 11 which are formally delimited from each other. The receiver model 10 comprises a neural network 15 of multiple dense layers and transforms a received vector y into a vector z: z=r(y). The application model 11 comprises a neural network 16 of multiple dense layers and transforms a vector z into the output vector $\hat{d}$: $\hat{d}$=α(z).

In embodiments wherein the system 1 comprises more than one application module 32 (or more than one receiver and application module 34), the vector $\hat{d}$ specifies the outputs of the respective application modules 32 (or receiver and application modules 34).

The neural networks of the transmitter model 7 and/or of the channel model 8 and/or of the receiver and application model 9 may include a feed-forward neural network as described before. Alternatively or in addition, the neural networks of the transmitter model 7 and/or of the channel model 8 and/or of the receiver and application model 9 may include a recurrent neural networks where the output at time 't' depends also on previous inputs. This is especially relevant to compensate for random channel effects which need to be estimated based on multiple observations. In this case, the vectors s, x, y, z and/or d of Figure 2 may be indexed with a discrete time t.

**Figure 3** is a flow chart of a method for configuring the data transmission and processing system 1, executed by the configuration device 5, by using the machine learning model 6.

First, the configuration device 5 trains the machine learning model 6 in function of training data (step S1). The training data specifies sets of input vector s and corresponding output vector $\hat{d}$. Since the system 1 performs some processing on the data, as modeled by the application module 32, and not only transmission, the input vector s and corresponding output vector d are different from each other. For example, an output vector $\hat{d}$ may have a lower dimension than the corresponding input vector s:

$$s \in \mathcal{R}^n \, and \, \hat{d} \in \mathcal{R}^m, with \, n > m$$

In typical examples, m < n/10 or m < n/100.

Training the machine learning model 6 may comprises determining weights by applying the stochastic gradient descent technique for a given differentiable loss function.

In case of multiple transmitters 22 and/or receiver and application module 34, the loss function may be a combination of loss functions associated with the respective applications. The concept applies directly to the case of multiple transmitters, receivers, and applications. All of them can be jointly optimize by considering weighted sums of loss functions. For example, assume that two transmitters need to simultaneously send data to two different receivers/applications. They could be jointly trained by modeling the setup as a large neural network with two inputs and two outputs and a combined

loss function

$$L = \mathrm{E}[\|s_1 - \widehat{d_1}\|_2^2] + \mathrm{E}[\|s_2 - \widehat{d_2}\|_2^2]$$

where $s_i$ is the data of transmitter i and $\hat{d}_i$ is the output of application i. The received signal $y_i$ at receiver i could be modeled as

$$y_i = x_1 + x_2 + w_i$$

where $w_i$ is a noise vector and $x_i$ is the transmitted signal from transmitter i.

In case of multiple transmitters 22 and/or receiver and application module 34, in some embodiments, the configuration device 5 can also train the model in multiple steps. For example, Transmitter and Receiver 1 are trained for one or multiple steps while the weights of Transmitter and Receiver 2 are fixed. Then, Transmitter and Receiver 2 are trained for one or multiple steps while the weights of Transmitter and Receiver 1 are fixed.

Then, the configuration device 5 configures at least one of the transmitter 22 and the receiver and application module 34 in function of the trained machine learning model 6 (step S2). Configuring a transmitter 22 may including deploying the neural network of the transmitter model 7, with its trained weights, in the configurable part of the transmitter 22. This may include for example the use of FPGA and/or a computer program and a processor. Similarly, configuring a receiver and application module 34 may including deploying the neural network of the receiver and application model 9, with its trained weights, in the configurable part of the receiver and application module 34. This may include for example the use of FPGA and/or a computer program and a processor.

In some embodiments, the neural networks are implemented as binarized neural networks, allowing for unprecedented throughput on FPGAs.

In the system 1, the transmission and processing of data is optimized end-to-end by training a machine learning model 6. This improves the efficiency of the data transmission and processing.

The system 1 may be used for a large variety of applications and may be optimized for input vectors of relatively large dimension. Indeed, the end-to-end training of the machine learning model 6 works for any hardware, channel model, data, and application as long as the transfer functions of all layers and the loss function are differentiable or their gradients can be estimated or approximated.

Moreover, the concept has significant implications for physical layer security as it is very difficult for an eavesdropper to extract useful information from the transmitted signal because it does not correspond to any known modulation/coding scheme.

Also, the proposed scheme allows combining of multiple (correlated) data sources for a machine learning task which might provide significant gains over methods relying on a single data source.

The system 1 does not require a binary representation of the data to be transmitted as is the case of classical communications systems. For this reason, the system 1 does not suffer from the curse of dimensionality. In particular, the input vector s and/or the output vector d may be data structure of high dimension.

In some embodiment, the configuration device 5 trains multiple machine learning models 6 with neural networks with different representation sizes, similar to rate adaptation in traditional systems, chosen depending on the channel conditions or other feedback from the transmitter/application. This allow adapting the deployed machine learning model 6 to current conditions.

For several tasks, such as classification, there is a trade-off between the required complexity at the transmitter and receiver. For example, if classification is carried out directly at the transmitter, the amount of transmitted information is very small compared to what needs to be transmitted if classification is carried out at the receiver based on raw data.

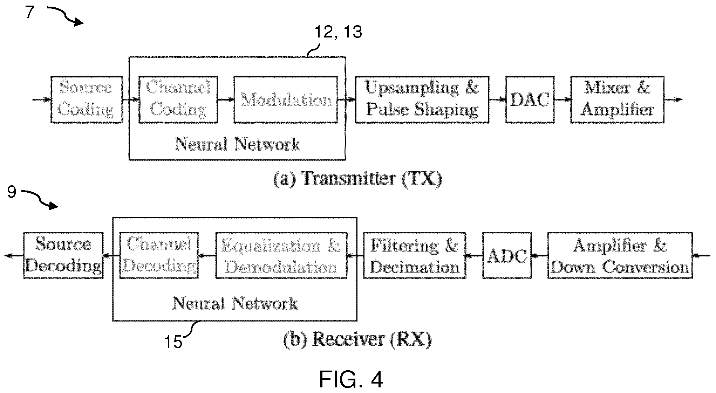

**Figure 4** is a block diagram of a transmitter model 7 and of a receiver model 10 according to some embodiments.

In some embodiments, the transmitter model 7 comprises, in addition to a neural network, other processing modules such as source coding, upsampling and pulse shaping, digital to analog conversion, mixer and amplifier...

Similarly, in some embodiments, the receiver model 10 comprises, in addition to a neural network, other processing modules such as amplifier and down conversion, analog to digital conversion, filtering and decimation, source decoding...

For example, at the transmitter, the neural network generates complex modulated symbols that are then upsampled and filtered as in a traditional system. Similar options are possible for the receiver. This is useful for multi-carrier systems, such as OFDM, where neural networks could be used to generate complex symbols that are mapped to subcarriers with the help of an inverse Fourier transform (FFT). At the receiver, the neural network would then begin after the FFT (and cyclic prefix removal).

Also, in some embodiments, the application model 11 comprises, in addition to a neural network, other processing modules, for example based on programmed algorithms (not shown on Figure 4).

Importantly, even if only sub-parts of the transmitter, receiver, and application are replaced by neural network layers, the system is always optimized from end-to-end. This is very different from individual learning/training of subcomponents.

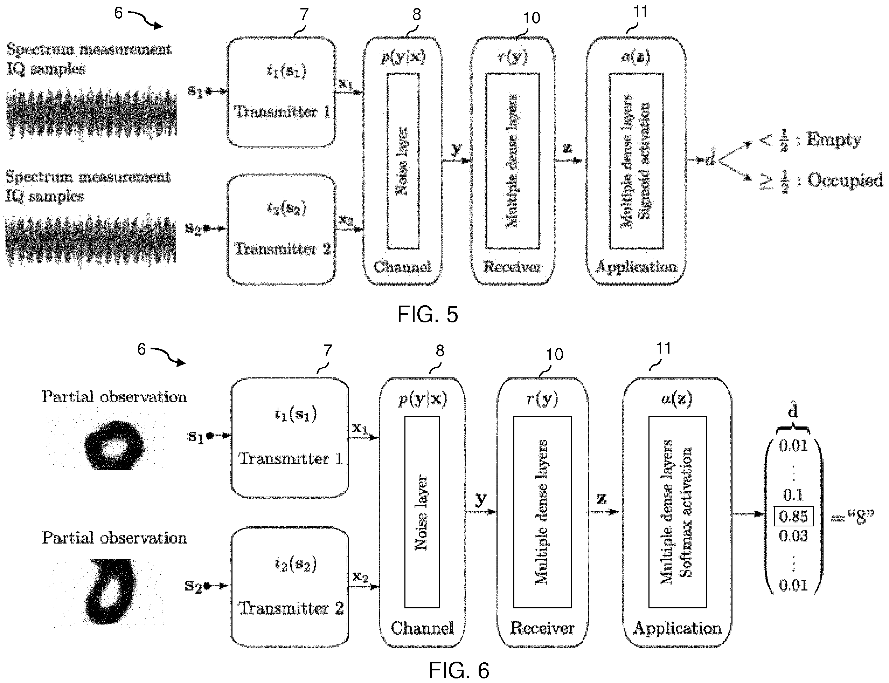

**Figure 5** is a block diagram of a machine learning model 6 for a system 1 for spectrum sensing with multiple distributed sensors.

In this embodiment, multiple sensors measure the radio spectrum and need to transmit their observations (IQ sample sequences) to a central node that decides whether the spectrum is occupied or not. This problem setup can hence be described by a large neural network with multiple inputs (e.g. the input vector s is the concatenation of input vectors $s_1$, $s_2$ specifying respective IQ samples sequences) and a single output. Assuming that both transmitters transmit simultaneously on the same frequency band, the received signal vector y can be modeled as

$$y = x_1 + x_2 + w$$

where w is a noise vector. Other types of channels could be considered by changing the way y is computed, e.g., concatenation of $x_1$ and $x_2$ in case of orthogonal channels (i.e., different frequency bands, time division duplex). The output $\hat{d} \in (0,1)$ for this example is scalar and can be interpreted as "the spectrum is free" whenever $\hat{d} < 1/2$. The loss function L is the binary cross-entropy between $\hat{d}$ and the ground truth $d \in \{0,1\}$ of the training data:

$$L = E\big[d\, log\big(\hat{d}\big) + (1 - d)\log(1 - \hat{d})\big]$$

This idea can be scaled to an arbitrary number of sensors.

Any other distributed detection or prediction task can be represented in this form.

**Figure 6** is a block diagram of a machine learning model 6 for a system 1 for object recognition/classification from partial observation.

Similar to the embodiment of Figure 5 concerning distributed spectrum sensing, we consider here the case where multiple observations from different remote locations (such as images from surveillance cameras) need to be combined for a recognition or classification task. Figure 6 shows an example where two partial images are sent to an application for classification of handwritten digits. None of the partial images alone are sufficient to enable this task.

Similarly, the application could be asked to detect faces or the presence of humans in multiple images taken at different positions or from different angles. Training works as in a supervised manner with labeled training data and a suitable loss function, such as the categorical cross-entropy.

In this embodiment, the output vector $\hat{d}$ specify for example the probabilities associated with respective classes. In the example of Figure 6, to partial observations of a digit "8" result in the highest probability associated with the recognized "8".

**Figure 7** is a structural view of the configuration device 5, which present the general architecture of a computer. The configuration device 5 comprises a processor 51 and a memory 52. The memory 52 stores a computer program P which, when executed by the processor 51, causes the configuration device 5 to execute the method described above with reference to Figure 2 to 6.

It is to be remarked that the functions of the various elements shown in the figures may be provided through the use of dedicated hardware as well as hardware capable of executing software in association with appropriate software. When provided by a processor, the functions may be provided by a single dedicated processor, by a single shared processor, or by a plurality of individual processors, some of which may be shared, for example in a cloud computing architecture. Moreover, explicit use of the term "processor" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non-volatile storage. Other hardware, conventional and/or custom, may also be included. Their function may be carried out through the operation of program logic, through dedicated logic, through the interaction of program control and dedicated logic, or even manually, the particular technique being selectable by the implementer as more specifically understood from the context.

It should be further appreciated by those skilled in the art that any block diagrams herein represent conceptual views of illustrative circuitry embodying the principles of the invention. Similarly, it will be appreciated that any flow charts represent various processes which may be substantially represented in computer readable medium and so executed by a computer or processor, whether or not such computer or processor is explicitly shown.

Embodiments of the method can be performed by means of dedicated hardware and/or software or any combination of both.

While the principles of the invention have been described above in connection with specific embodiments, it is to be clearly understood that this description is made only by way of example and not as a limitation on the scope of the invention, as defined in the appended claims.

**Claims**

1. Method for configuring a data transmission and processing system (1), executed by a configuration device (5), wherein the system (1) comprises at least one transmitter (22), at least one receiver (31), and a communication channel (4) between the transmitter and the receiver, **characterized in that** the method comprises:

   - training (S1) a machine learning model (6) of the data transmission and processing system as a function of training data, wherein the machine learning model specifies at least a transmitter model (7) configured for transforming an input vector into a first vector (x) and including a transmitter neural network (12, 13), a channel model (8) configured for providing a second vector (y) as a function of the first vector (x), and a receiver and application model (34) configured for transforming the second vector (y) into an output vector ($\hat{d}$) and including a receiver and application neural network (15, 16), wherein the training data specify respective sets of input vector (s) and output vector ($\hat{d}$), wherein an output vector (d) specifies an output of the receiver and application model (34) for a corresponding input vector (s) applied as input to the transmitter model (7), wherein an output vector is different from the corresponding input vector,

- configuring (S2) at least one of the transmitter and the receiver as a function of the trained machine learning model, by deploying the transmitter model (7) in the transmitter (22) and/or deploying the receiver and application model (34) in the receiver (31).

2. Method according to claim 1, wherein an output vector has a lower dimension than an input vector.

3. Method according to one of claims 1 and 2, wherein the data transmission and processing system comprises a plurality of transmitters, wherein an input vector specifies the input data of the plurality of transmitters.

4. Method according to one of claims 1 to 3, wherein the data transmission and processing system comprises a plurality of receivers, wherein an output vector specifies the output data from the plurality of receivers.

5. Method according to one of claims 1 to 4, wherein training said machine learning model comprises determining weights of the transmitter neural network and of the receiver and application neural network by applying a stochastic gradient descent algorithm.

6. Method according to one of claims 1 to 5, wherein the transmitter neural network includes multiple dense layers (12) followed by a normalization layer (13) configured for applying one of: a normalization to a predetermined norm, scaling to a unit absolute value, convolution with a filter.

7. Method according to one of claims 1 to 6, wherein the transmitter model includes said transmitter neural network and at least one other transmitter processing module, and/or the receiver and application

tion model includes said receiver and application neural network at least one other receiver and application processing module.

8. Method according to one of claims 1 to 7, wherein the data transmission and processing system is a distributed detection system for determining a state in function of a plurality of detectors.

9. Method according to one of claims 1 to 7, wherein the data transmission and processing system is a recognition or classification system for recognizing or classifying an object in function of a plurality of partial observations.

10. Computer program (P) comprising instructions for performing the method of one of claims 1 to 9 when said instructions are executed by a computer.

11. Configuration device (5) for configuring a data transmission and processing system (1), wherein the system (1) comprises at least one transmitter (22), at least one receiver (31), and a communication channel (4) between the transmitter and the receiver, **characterized in that** it is configured for:

- training (S1) a machine learning model (6) of the data transmission and processing system as a function of training data, wherein the machine learning model specifies at least a transmitter model (7) configured for transforming an input vector into a first vector (x) and including a transmitter neural network (12, 13), a channel model (8) configured for providing a second vector (y) as a function of the first vector (x), and a receiver and application model (34) configured for transforming the second vector (y) into an output vector ($\hat{d}$) and including a receiver and application neural network (15, 16), wherein the training data specify respective sets of input vector (s) and output vector ($\hat{d}$), wherein an output vector ($\hat{d}$) specifies an output of the receiver and application model (34) for a corresponding input vector (s) applied as input to the transmitter model (7), wherein an output vector is different from the corresponding input vector,

- configuring (S2) at least one of the transmitter and the receiver as a function of the trained machine learning model, by deploying the transmitter model (7) in the transmitter (22) and/or deploying the receiver and application model (34) in the receiver (31).

12. Source device (2) comprising a transmitter configured according to the method of any one of claims 1 to 9.

13. Destination device (3) comprising a receiver configured according to any one of claims 1 to 9.

14. Data transmission and processing system (1), comprising at least one source device according to claim 12, at least one destination device according to claim 13 and a configuration device according to claim 11.

**Patentansprüche**

1. Verfahren zum Auslegen eines Datenübertragungs- und

- verarbeitungssystems (1), das von einer Auslegungsvorrichtung (5) ausgeführt wird, wobei das System (1) mindestens einen Sender (22), mindestens einen Empfänger (31) und einen Kommunikationskanal (4) zwischen dem Sender und dem Empfänger umfasst, **dadurch gekennzeichnet, dass** das Verfahren Folgendes umfasst:

- Trainieren (S1) eines Maschinenlernmodells (6) des Datenübertragungs- und -verarbeitungssystems als eine Funktion von Trainingsdaten, wobei das Maschinenlernmodell mindestens ein Sendermodell (7), das zum Umwandeln eines Eingangsvektors in einen ersten Vektor (x) ausgelegt ist und ein neuronales Sendenetzwerk (12, 13) beinhaltet, ein Kanalmodell (8), das zum Bereitstellen eines zweiten Vektors (y) als eine Funktion des ersten Vektors (x) ausgelegt ist, und ein Empfangs- und Anwendungsmodell (34), das zum Umwandeln des zweiten Vektors (y) in einen Ausgangsvektor ($\hat{d}$) ausgelegt ist und ein neuronales Empfangs- und Anwendungsnetzwerk (15, 16) beinhaltet, spezifiziert, wobei die Trainingsdaten jeweilige Sätze aus Eingangsvektor (s) und Ausgangsvektor ($\hat{d}$) spezifizieren, wobei ein Ausgangsvektor ($\hat{d}$) eine Ausgabe des Empfangs- und Anwendungsmodells (34) für einen entsprechenden Eingangsvektor (s), der als eine Eingabe zum Sendermodell (7) angewendet wird, spezifiziert, wobei sich ein Ausgangsvektor vom entsprechenden Eingangsvektor unterscheidet,
- Auslegen (S2) von mindestens einem des Senders und des Empfängers als eine Funktion des trainierten Maschinenlernmodells durch Einsetzen des Sendermodells (7) im Sender (22) und/oder Einsetzen des Empfangs- und Anwendungsmodells (34) im Empfänger (31).

2. Verfahren nach Anspruch 1, wobei ein Ausgangsvektor eine kleinere Dimension aufweist als ein Eingangsvektor.

3. Verfahren nach Anspruch 1 und 2, wobei das Datenübertragungs- und -verarbeitungssystem eine Vielzahl von Sendern umfasst, wobei der Eingangsvektor die Eingangsdaten der Vielzahl von Sendern spezifiziert.

4. Verfahren nach einem der Ansprüche 1 bis 3, wobei das Datenübertragungs- und -verarbeitungssystem eine Vielzahl von Empfängern umfasst, wobei der Ausgangsvektor die Ausgangsdaten der Vielzahl von Empfängern spezifiziert.

5. Verfahren nach einem der Ansprüche 1 bis 4, wobei das Trainieren des Maschinenlernmodells das Bestimmen von Gewichtungen des neuronalen Sendenetzwerks des Empfangs- und Anwendungsnetzwerks durch Anwenden eines stochastischen Gradientenabfallalgorithmus umfasst.

6. Verfahren nach einem der Ansprüche 1 bis 5, wobei das neuronale Sendenetzwerk mehrere dichte Schichten (12), gefolgt von einer Normalisierungsschicht (13), die zum Anwenden von einem von Folgendem ausgelegt ist: einer Normalisierung auf eine vorbestimmte Norm, Skalieren auf einen absoluten Einheitswert, Faltung mit einem Filter, beinhaltet.

7. Verfahren nach einem der Ansprüche 1 bis 6, wobei das Sendermodell das neuronale Sendenetzwerk und mindestens ein weiteres Senderverarbeitungsmodul beinhaltet und/oder das Empfangs- und Anwendungsmodell das neuronale Empfangs- und Anwendungsnetzwerk mindestens ein weiteres Empfangs- und Anwendungsverarbeitungsmodul beinhaltet.

8. Verfahren nach einem der Ansprüche 1 bis 7, wobei das Datenübertragungs- und -verarbeitungssystem ein verteiltes Detektionssystem zum Bestimmen eines Status in Funktion einer Vielzahl von Detektoren ist.

9. Verfahren nach einem der Ansprüche 1 bis 7, wobei das Datenübertragungs- und -verarbeitungssystem ein Erkennungs- oder Klassifizierungssystem zum Erkennen oder Klassifizieren eines Objekts in Funktion einer Vielzahl von Teilbeobachtungen ist.

10. Computerprogramm (P), das Anweisungen zum Durchführen des Verfahrens nach einem der Ansprüche 1 bis 9, wenn die Anweisungen von einem Computer ausgeführt werden, umfasst.

11. Auslegungsvorrichtung (5) zum Auslegen eines Datenübertragungs- und -verarbeitungssystems (1), wobei das System (1) mindestens einen Sender (22), mindestens einen Empfänger (31) und einen Kommunikationskanal (4) zwischen dem Sender und dem Empfänger umfasst, **dadurch gekennzeichnet, dass** sie zu Folgendem ausgelegt ist:

- Trainieren (S1) eines Maschinenlernmodells (6) des Datenübertragungs- und -verarbeitungssystems als eine Funktion von Trainingsdaten, wobei das Maschinenlernmodell mindestens ein Sendermodell (7), das zum Umwandeln eines Eingangsvektors in einen ersten Vektor (x) ausgelegt ist und ein neuronales Sendenetzwerk (12, 13) beinhaltet, ein Kanalmodell (8), das zum Bereitstellen eines zweiten Vektors (y) als eine Funktion des ersten Vektors (x) ausgelegt ist, und ein Empfangs- und Anwendungsmodell (34), das zum Umwandeln des zweiten Vektors (y) in einen Ausgangsvektor ($\hat{d}$) ausgelegt ist und ein neuronales Empfangs- und Anwendungsnetzwerk (15, 16) beinhaltet, spezifiziert, wobei die Trainingsdaten jeweilige Sätze aus Eingangsvektor (s) und Ausgangsvektor ($\hat{d}$) spezifizieren, wobei ein Ausgangsvektor ($\hat{d}$) eine Ausgabe des Empfangs- und Anwendungsmodells (34) für einen entsprechenden Eingangsvektor (s), der als eine Eingabe zum Sendermodell (7) angewendet wird, spezifiziert, wobei sich ein Ausgangsvektor vom entsprechenden Eingangsvektor unterscheidet,
- Auslegen (S2) von mindestens einem des Senders und des Empfängers als eine Funktion des trainierten Maschinenlernmodells durch Einsetzen des Sendermodells (7) im Sender (22) und/oder Einsetzen des Empfangs- und Anwendungsmodells (34) im Empfänger (31).

**12.** Quellvorrichtung (2), die einen Sender umfasst, der gemäß dem Verfahren nach einem der Ansprüche 1 bis 9 ausgelegt ist.

**13.** Zielvorrichtung (3), die einen Empfänger umfasst, der nach einem der Ansprüche 1 bis 9 ausgelegt ist.

**14.** Datenübertragungs- und -verarbeitungssystem (1), das mindestens eine Quellvorrichtung nach Anspruch 12, mindestens eine Zielvorrichtung nach Anspruch 13 und eine Auslegungsvorrichtung nach Anspruch 11 umfasst.

**Revendications**

**1.** Procédé pour configurer un système (1) de transmission et de traitement de données, exécuté par un dispositif de configuration (5), dans lequel le système (1) comprend au moins un émetteur (22), au moins un récepteur (31), et un canal de communication (4) entre l'émetteur et le récepteur, **caractérisé en ce que** le procédé comprend :

- la formation (S1) d'un modèle d'apprentissage machine (6) du système de transmission et de traitement de données en fonction de données de formation, dans lequel le modèle d'apprentissage machine spécifie au moins un modèle d'émetteur (7) configuré pour transformer un vecteur d'entrée en un premier vecteur (x) et comportant un réseau neuronal d'émetteur (12, 13), un modèle de canal (8) configuré pour fournir un deuxième vecteur (y) en fonction du premier vecteur (x), et un modèle de récepteur et d'application (34) configuré pour transformer le deuxième vecteur (y) en un vecteur de sortie ($\hat{d}$) et comportant un réseau neuronal de récepteur et d'application (15, 16), dans lequel les données de formation spécifient des ensembles respectifs de vecteur d'entrée (s) et de vecteur de sortie ($\hat{d}$), dans lequel un vecteur de sortie ($\hat{d}$) spécifie une sortie du modèle de récepteur et d'application (34) pour un vecteur d'entrée (s) correspondant appliqué comme entrée au modèle d'émetteur (7), dans lequel un vecteur de sortie est différent du vecteur d'entrée correspondant,
- la configuration (S2) d'au moins un parmi l'émetteur et le récepteur en fonction du modèle d'apprentissage machine formé, en déployant le modèle d'émetteur (7) dans l'émetteur (22) et/ou en déployant le modèle de récepteur et d'application (34) dans le récepteur (31).

**2.** Procédé selon la revendication 1, dans lequel un vecteur de sortie a une dimension inférieure à un vecteur d'entrée.

**3.** Procédé selon l'une des revendications 1 et 2, dans lequel le système de transmission et de traitement de données comprend une pluralité d'émetteurs, dans lequel un vecteur d'entrée spécifie les données d'entrée de la pluralité d'émetteurs.

**4.** Procédé selon l'une des revendications 1 à 3, dans lequel le système de transmission et de traitement de données comprend une pluralité de récepteurs, dans lequel un vecteur de sortie spécifie les données de sortie à partir de la pluralité de récepteurs.

**5.** Procédé selon l'une des revendications 1 à 4, dans lequel la formation dudit modèle d'apprentissage machine comprend la détermination des poids du réseau neuronal d'émetteur et du réseau neuronal de récepteur et d'application en appliquant un algorithme de descente de gradient stochastique.

6. Procédé selon l'une des revendications 1 à 5, dans lequel le réseau neuronal d'émetteur comporte de multiples couches denses (12) suivies d'une couche de normalisation (13) configurées pour appliquer l'une parmi : une normalisation à une norme prédéterminée, une mise à l'échelle à une valeur absolue unitaire, une convolution avec un filtre.

7. Procédé selon l'une des revendications 1 à 6, dans lequel le modèle d'émetteur comporte ledit réseau neuronal d'émetteur et au moins un autre module de traitement d'émetteur, et/ou le modèle de récepteur et d'application comporte ledit réseau neuronal de récepteur et d'application et au moins un autre module de traitement de récepteur et d'application.

8. Procédé selon l'une des revendications 1 à 7, dans lequel le système de transmission et de traitement de données est un système de détection réparti pour déterminer un état en fonction d'une pluralité de détecteurs.

9. Procédé selon l'une des revendications 1 à 7, dans lequel le système de transmission et de traitement de données est un système de reconnaissance ou de classification pour reconnaître ou classifier un objet en fonction d'une pluralité d'observations partielles.

10. Programme informatique (P) comprenant des instructions pour réaliser le procédé de l'une des revendications 1 à 9 lorsque lesdites instructions sont exécutées par un ordinateur.

11. Dispositif de configuration (5) pour configurer un système (1) de transmission et de traitement de données, dans lequel le système (1) comprend au moins un émetteur (22), au moins un récepteur (31), et un canal de communication (4) entre l'émetteur et le récepteur, **caractérisé en ce qu'**il est configuré pour :

   - former (S1) un modèle d'apprentissage machine (6) du système de transmission et de traitement de données en fonction de données de formation, dans lequel le modèle d'apprentissage machine spécifie au moins un modèle d'émetteur (7) configuré pour transformer un vecteur d'entrée en un premier vecteur (x) et comportant un réseau neuronal d'émetteur (12, 13), un modèle de canal (8) configuré pour fournir un deuxième vecteur (y) en fonction du premier vecteur (x), et un modèle de récepteur et d'application (34) configuré pour transformer le deuxième vecteur (y) en un vecteur de sortie

($\hat{d}$) et comportant un réseau neuronal de récepteur et d'application (15, 16), dans lequel les données de formation spécifient des ensembles respectifs de vecteur d'entrée (s) et de vecteur de sortie ($\hat{d}$), dans lequel un vecteur de sortie ($\hat{d}$) spécifie une sortie du modèle de récepteur et d'application (34) pour un vecteur d'entrée (s) correspondant appliqué comme entrée au modèle d'émetteur (7), dans lequel un vecteur de sortie est différent du vecteur d'entrée correspondant,
   - configurer (S2) au moins un parmi l'émetteur et le récepteur en fonction du modèle d'apprentissage machine formé, en déployant le modèle d'émetteur (7) dans l'émetteur (22) et/ou en déployant le modèle de récepteur et d'application (34) dans le récepteur (31).

12. Dispositif source (2) comprenant un émetteur configuré selon le procédé de l'une quelconque des revendications 1 à 9.

13. Dispositif de destination (3) comprenant un récepteur configuré selon l'une quelconque des revendications 1 à 9.

14. Système (1) de transmission et de traitement de données, comprenant au moins un dispositif source selon la revendication 12, au moins un dispositif de destination selon la revendication 13 et un dispositif de configuration selon la revendication 11.

FIG. 1

FIG. 2

FIG. 3

FIG. 7

7

12, 13

| Source Coding | Channel Coding | Modulation | Upsampling & Pulse Shaping | DAC | Mixer & Amplifier |

Neural Network

(a) Transmitter (TX)

9

15

| Source Decoding | Channel Decoding | Equalization & Demodulation | Filtering & Decimation | ADC | Amplifier & Down Conversion |

Neural Network

(b) Receiver (RX)

FIG. 4

EP 3 393 083 B1

FIG. 5

FIG. 6

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6269351 B1
- US 2014025382 A1
- US 2001025232 A

**Non-patent literature cited in the description**

- **O'SHEA AT.** An Introduction to Machine Learning Communication System. CORNELL UNIVERSITY ITHACA, 02 February 2017